# EUROPEAN PATENT APPLICATION

(11) **EP 1 903 358 A1**
(43) Date of publication of application: **26.03.2008**
(21) Application number: 06425650.6
(22) Date of filing: 22.09.2006
(51) Int. Cl.: G02B 6/00, B60Q 1/00, F21S 8/10, G09F 13/18

(54) **Lighting device with a light guide and means for re-directing the light extracted from the light guide**

(71) Applicant: Centro Ricerche Plast-Optica S.r.l., 33020 Amaro (Udine) (IT)
(72) Inventor: Sinesi, Sabino, c/o Centro Ricerche Plast-Optica, 33020 Amaro (Udine) (IT); Rotaris, Gianluca, c/o Centro Ricerche Plast-Opt, 33020 Amaro (Udine) (IT); Di Vora, Igor, c/o Centro Ricerche Plast-Optica, 33020 Amaro (Udine) (IT); Paroni, Sara, c/o Centro Ricerche Plast-Optica, 33020 Amaro (Udine) (IT); Fadi, Denis, c/o Centro Ricerche Plast-Optica, 33020 Amaro (Udine) (IT)
(74) Representative: Notaro, Giancarlo

(57) **Abstract**

A light-guide lighting or signalling device, for example for lights of motor vehicle, comprises a light guide (2) and at least one light source (8, 9) provided in a position adjacent to a surface of the light guide. The light guide has corrugated surface portions to enable extraction outwards of the light that propagates within the light guide. Associated to a surface (4) of the guide (2) is a distribution (11) of mirrors (12), which reflects the light extracted so that it is redirected through the light guide and made to emerge therefrom.

## Description

The present invention relates to light-guide lighting devices that present at least one corrugated surface portion for extraction of the light outwards.

In light guides, once the light radiation coming from one or more light sources is introduced into the light guide, it is confined therein on account of the phenomenon of total internal reflection resulting from the fact that the guide is made of a material with an index of refraction greater than that of the medium in which the guide is to be immersed (typically air). If care is taken that the shape of the guide is such that the light contained within the guide impinges the outer surface always forming with the normal to the surface in the point of incidence an angle greater than the critical one, it is possible to convey the flow of light over considerable distances. An essential condition for preventing any losses is represented by the fact that the outer surface must be as smooth as possible. In fact, at a microscopic level the presence of roughness may be viewed as a series of facets that are markedly angled with respect to the pattern of the macroscopic surface. It is obvious that a ray of light that impinges on one of these facets is no longer necessarily confined within the guide because the angle of incidence on the surface at a microscopic level can differ markedly from what was envisaged in the design stage. Obviously, if the light guide is to be used in a lighting device, it is necessary, in addition to collecting and conveying the light coming from the light sources, to enable the light to leave the guide in given areas thereof and/or in given directions. Light guides of this type are, for example, applied for providing signalling lights (position lights, stop lights, direction lights, etc.) for motor vehicles. In the case of said application, the angular distribution of the light coming out is required to comply with given photometric requirements established by the international standards and at the same time to satisfy also aesthetic requirements, such as, for example, an appearance that is as uniform as possible. There exist different systems for extracting the light from the guide, which include the use of (metallized or non-metallized) prisms, made on the guide itself, or else the reduction of the cross section of the guide in a given area, or the conformation of a given area of the guide with a more or less pronounced curvature, or the provision of a surface with more or less pronounced corrugations over all the outer surface of the light guide or on part thereof.

The present invention relates to light guides of the latter type, i.e., in which extraction of the light on the outside of the guide is obtained by providing at least one corrugated surface portion. Said method is preferred in so far as it enables the best results in terms of homogeneity of the appearance of the light guide when it is lit up to be obtained. In fact, since the emission of the light occurs from a multiplicity of microscopic facets that constitute the corrugation, a virtual extended source proper is obtained. When the light sources are turned off, the corrugation imparts on the light guide an opalescent appearance.

The problem encountered with light guides presenting corrugated surface portions for extraction of the light lies in the fact that they enable in general an extremely poor control over the direction of output of the light, unlike what occurs instead in light guides that use extraction prisms. What is found is that, irrespective of the three-dimensional shape of the light guide, the light that travels within the guide coming from at least one of the light sources associated to the guide itself and that impinges upon the corrugated surface portion generally has in each point a well defined average propagation vector. The effect of the corrugation is to enable part of the light to leave the guide. For a wide range of values of roughness, obtained with a plurality of different techniques, it is found that the light that leaves the corrugated surface continues to present locally a distribution of intensities in the various directions represented by a diagram with a lobe markedly concentrated in an average direction of propagation, which lies in the plane identified by the average vector of propagation of the light within the guide prior to its impinging upon the corrugated surface and by the vector normal to the surface itself in the point of incidence. Generally, these lobes have an axis of symmetry that forms an angle comprised between 65° and 80° with the normal to the surface, according to the type of machining. Obviously, exit of the light does not remain confined exclusively to the rough area. In fact, the presence of a rough portion of the light guide perturbs the propagation of all the rays of light that impinge thereupon. A fraction of said rays is reflected within the guide with an angle such as not to satisfy the condition of total internal reflection any longer when said rays subsequently encounter the smooth walls of the guide.

The type of behaviour described above has meant that light guides of this type pose problems to the optical designer where he wants to apply them in devices such as lights for motor vehicles, or in lighting or signalling devices, where generally a greater concentration of the light is required in the direction normal to the light-extraction surface.

Consequently, in known devices, although the use of corrugated surfaces guarantees a uniform appearance, on the other hand there is an enormous waste of light since the majority of the radiation extracted presents directions that are even very divergent with respect to the desired direction.

The purpose of the present invention is to solve the technical problem described above by providing a light-guide lighting device that guarantees a much uniform appearance and at the same time a greater concentration of the light extracted in directions different from the one that it would assume on account of the corrugation of the surface alone, such as, for example, in the direction normal to the surface of exit of the light from the guide.

In order to achieve said purpose, the subject of the invention is a light-guide lighting device characterized in that associated to said light guide is a distribution of mirrors facing a surface of the light guide from which the light comes out, said mirrors having a pre-set geometry in such a way that a part of the light coming out through said surface is reflected so that it is made to retraverse the guide itself and to emerge from this in a desired direction.

In a first embodiment, said distribution of mirrors faces one of said main light-extraction surfaces. It should be emphasized how there are no particular requirements on the three-dimensional shape of the light guide. The only constraint is that the light that travels within the guide coming from at least one of the light sources associated to the guide and that impinges upon the corrugated surface portion should present locally a well-defined average propagation vector. This is an essential condition because the light that comes out from the corrugated surface locally presents lobes that are markedly concentrated in a well-defined average direction of propagation, which is in turn a condition indispensable for enabling design of the mirrors that are to send a significant fraction of the light in the desired direction. In the presence of this condition it may, in fact, be assumed that the corrugated portion of the surface of the guide is nothing other than an extended light source, of arbitrary shape, and that locally it has a well-defined average direction of emission of the light (in the sense that, taken a point on said surface, there always exists a sufficiently small neighbourhood of said point from which the light emerges with a well-defined average direction). This means that it is in general possible for the average direction of emission of the light to vary from point to point on the corrugated surface portion. In general, corrugated surfaces having a configuration of arbitrary complexity, but in any case continuous, present a continuous variation of the average vector of propagation of the light emitted along the surface of emission. It should moreover be pointed out how in general a plurality of sources are able to introduce light into the guide and how the light coming from each of these can present in any point a distinct and well-defined lobe.

The underlying idea is that of exploiting this point directionality of the light leaving the guide in order to design mirrors that reflect this radiation in a desired direction. Using a plurality of very small mirrors set in the immediate vicinity of the light-extraction surface, it is possible, even in the presence of a corrugated surface of a complex shape, to vary the inclination of the mirrors from point to point so as to compensate for the variation of the direction of local emission. Obviously, it is possible both to direct the light reflected by the mirrors in just one direction and to separate it in a number of directions exploiting curved mirrors or grid of mirrors that reflect the light in different directions and are distributed throughout the emitting surface. In addition, this method can be applied to the light coming from each single source associated to the guide, thus enabling the creation of arrays of mirrors in which mirrors designed to work with the light of one source are interspersed with mirrors that use the lobes generated by the light coming from another source.

In a variant, said distribution of mirrors faces one smooth portion of the surface of the light guide, from which there comes out at least in part light that reaches said smooth portion after being reflected within the guide by one of said corrugated surfaces. Using the same basic idea, it is consequently possible to apply the invention also to the light that comes out not from the corrugated surface but from the smooth walls of the guide set "downstream" of the corrugated surface (along the path of propagation that starts from the light source). In this case, the lobes are generally less marked and intense, but geometrical and/or aesthetic reasons can render a choice of this sort convenient.

Thanks to the characteristics indicated above, the light-guide lighting device according to the invention on the one hand preserves the advantages proper to solutions with corrugated light-extraction surfaces, which principally consist in achieving the appearance of a very uniform extended source, and on the other hand enables a beam of light to be obtained at output from the lighting device that has a relatively high intensity in a desired direction with respect to the surface of exit of the light from the guide.

Purely by way of non-limiting example, some particularly simple applications of the invention and their principle of operation will now be described. The description will refer to the annexed plate of drawings, which is provided purely by way of non-limiting example and in which:
- Figures 1 and 2 are cross-sectional views that show the principle of operation of a light-guide lighting device in which the light guide comprises two main corrugated light-extraction surfaces and two light-input surfaces, and in which, for reasons of simplicity, the case where said surfaces are planar has been considered;
- Figure 3 is a schematic view of the same light-guide lighting device modified according to the present invention;
- Figure 4 shows a detail of the device of Figure 3 for the purposes of a further illustration of the corresponding principle of operation;
- Figure 5 shows the principle upon which the mirrors are oriented in the particular case where it is desired to cause the light to come out in a direction perpendicular to the plane tangential to the guide in the point of interest;
- Figure 6 shows an arrangement of mirrors in the simplified case, but of considerable practical utility, where, from a guide with plane and parallel surfaces, it is desired to extract the light in a direction perpendicular to the guide itself;
- Figure 7 shows a similar case where the mirrors are oriented so as to maximize the output of the light in a desired direction, not necessarily normal to the guide itself;
- Figure 8 is an exploded perspective view that illustrates a complete device, which exploits the principles of the present invention;
- Figure 9 is a schematic cross-sectional view of a variant of the device according to the invention, in which the mirrors are set facing a smooth portion of the surface of the light guide;
- Figure 10 is a perspective view of the device represented in Figure 9; and
- Figures 11-14 are exploded perspective views of further applications of the device according to the invention.

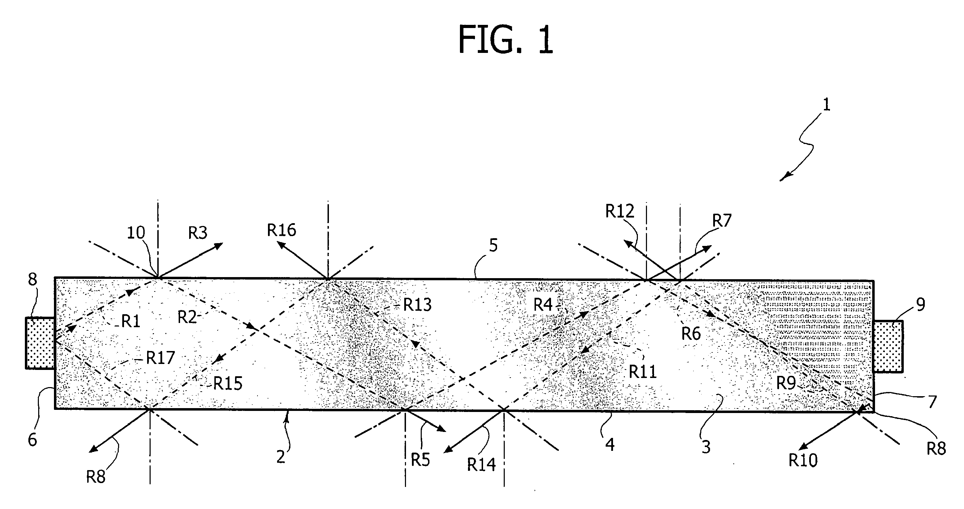

With reference to Figure 1, designated as a whole by 1 is a lighting device, which can be used for example for a motor-vehicle light, comprising a light guide 2. The light guide 2 comprises, in a way in itself known, a body 3 of an elongated shape, made of any suitable material, such as glass or plastic material, as will be readily understandable to persons skilled in the branch. The body 3 of the light guide has two main opposite surfaces 4, 5, which, in the example illustrated, are parallel to one another, even though in general this does not constitute at all a constraint for the purposes of operation of the device. The body 3 of the light guide moreover has two end surfaces 6, 7, in positions adjacent to which two light sources 8, 9, for example of the LED type, are provided.

According to the invention, at least one of the main surfaces 4, 5 has either totally or in part a corrugated portion. In this way, when the rays of light (which propagate, and remain confined, within the light guide 3 by total internal reflection on the smooth walls of the guide) impinge upon the corrugated portion, they are only partially reflected within the light guide. A part of the light is instead extracted outwards, partially inhibiting the total internal reflection. In the case of the specific example illustrated, both of the surfaces 4 and 5 are corrugated.

Thus, for example, a ray of light R1 emitted by the LED source 8 encounters in 10 the surface 5 of the light guide and is in part reflected within the light guide in a ray R2 and in part transmitted on the outside according to a ray R3. Said phenomenon is repeated for the ray R2, which is in part reflected in a ray R4 and in part transmitted on the outside according to a ray R5. The ray R4 is reflected within the light guide in a ray R6 and is in part transmitted on the outside according to a ray R7. The ray R6 is reflected in a ray R8 by the end surface 7. The ray R8 is reflected by the main surface 4 in a ray R9 and in part transmitted on the outside according to a ray R10. The ray R9 is in part reflected in a ray R11 and in part transmitted on the outside according to a ray R12. The ray R11 is reflected in a ray R13 and in part transmitted on the outside according to a ray R14. The ray R13 is reflected in a ray R15 and in part transmitted according to a ray R16. The ray R15 is reflected in a ray R17 and in part transmitted on the outside according to a ray R18. The ray R17 is reflected by the end surface 6. The process can continue with the light which propagates forwards and backwards within the light guide between the two end surfaces 6, 7, whilst a part of light exits on the outside through the two main surfaces 4 and 5.

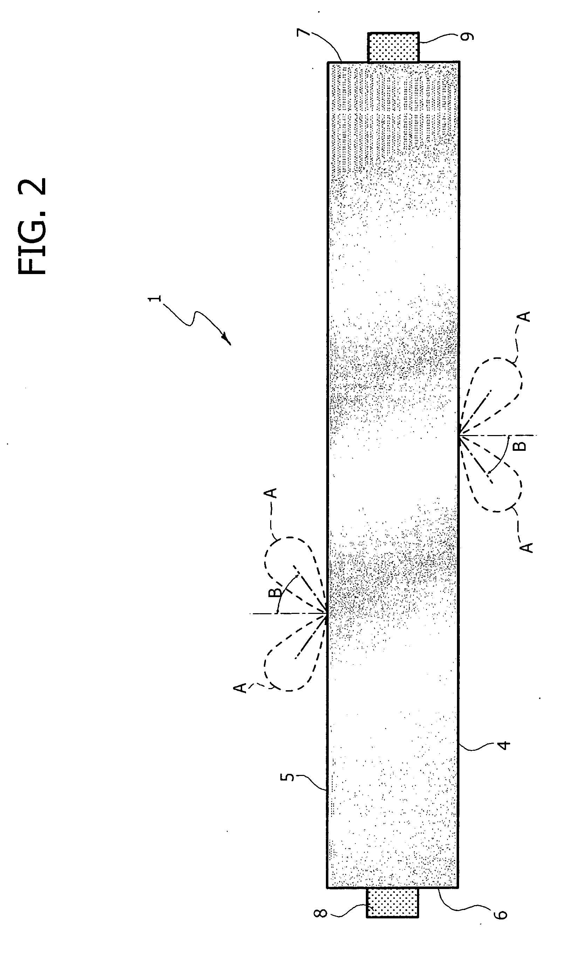

A light guide made in this way would not solve the problem that lies at the basis of the present invention, in so far as the light extracted from each point of the two main surfaces 4, 5 would present a distribution of intensity represented by the lobes designated by A in Figure 2. As may be seen from the lobes A illustrated in said figure, the maximum intensity of the extracted light is recorded according to directions that form an angle B with respect to the direction normal to the light-extraction surface that is relatively wide, for example in the region of 60°-70°. A device of this sort can hence be used for providing a lighting device of relatively low efficiency, in so far as the component of the light extracted in the direction normal to the light-extraction surface is relatively small.

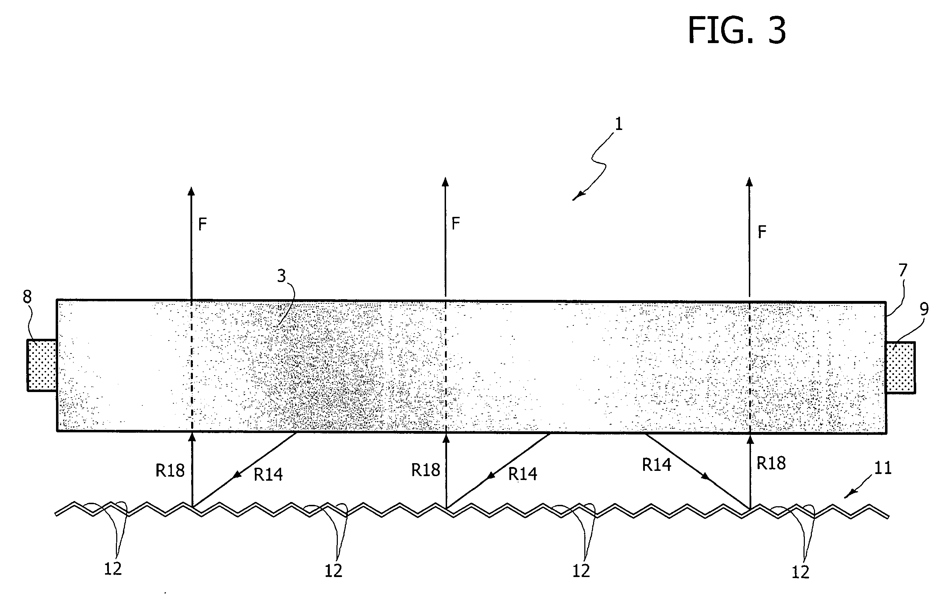

With reference to Figure 3, in order to solve said problem, according to the present invention provided in front of the first main surface 4 is a distribution 11 of micromirrors 12, the geometry of which is predetermined in such a way that the rays of light leaving the first main surface 4 are reflected by the distribution of mirrors 12 substantially in a direction normal to the main surfaces 4, 5 of the light guide.

It would be preferable for the dimensions of the mirrors to be such as not to be resolved by the human eye and such as to leave the homogeneous appearance of the device unaltered. Said mirrors can be obtained by moulding and subsequent metallization using moulds obtained with diamond machining techniques.

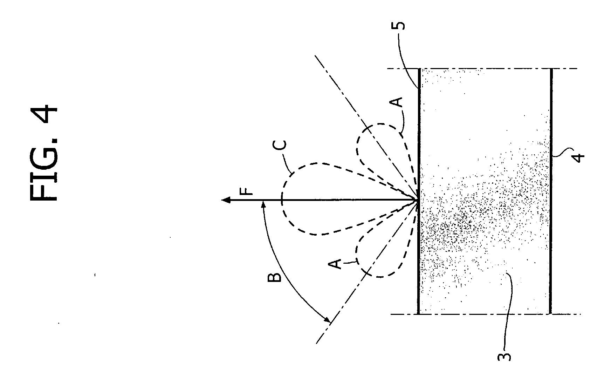

Thus, for example, the ray of light R14 leaving the first main surface 4 is reflected by the mirrors 12 in a ray R18 orthogonal to the surfaces 4, 5. The ray R18 traverses the surface 4 and enters the body of the light guide, traverses said body, and comes out therefrom through the opposite main surface 5 to be finally directed outwards, beyond the light guide 2. With reference to Figure 4, on account of said arrangement, in a position corresponding to each point of the main surface 5 of the light guide, the distribution of the intensity of the light coming out is represented by a set of three lobes, i.e., by the two side lobes A already described above, plus an additional central lobe, designated by C in Figure 4, the axis of symmetry of which coincides with a direction normal to the surface 5.

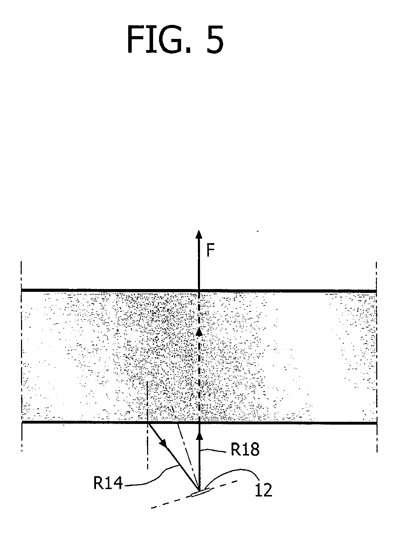

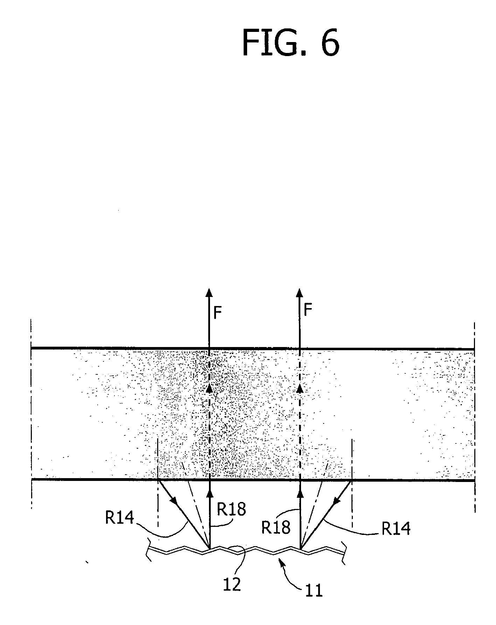

Figures 5 and 6 illustrate in detail the case of plane mirrors 12 (the mirrors could also have a curved profile). As may be seen, the inclination of each mirror is chosen so as to guarantee that they will reflect the light in the desired direction.

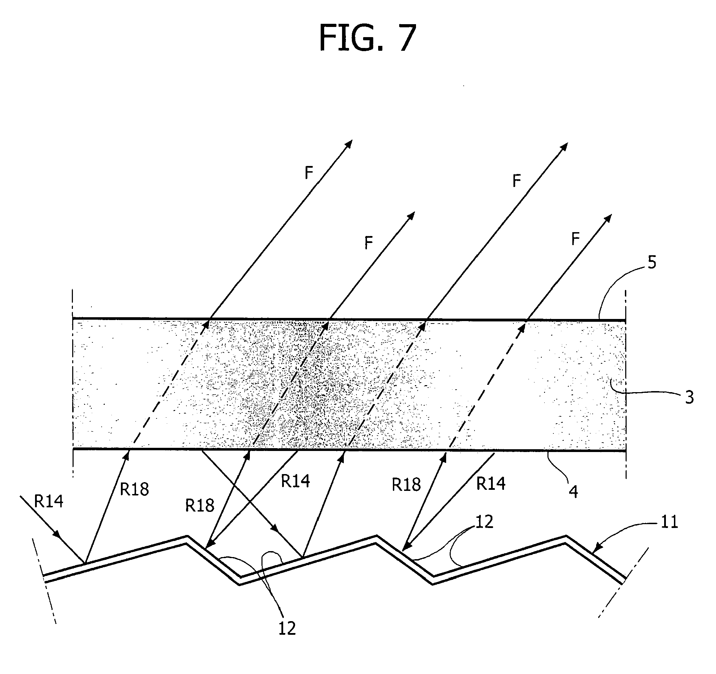

Figure 7 regards the case where said direction is not the direction normal to the light-extraction surface, but a direction inclined with respect thereto. Said condition can be required in the case, for example, of a rear light of a motor vehicle set in a position corresponding to a side edge of the bodywork of the motor vehicle. In this case, the micromirrors 12 have an asymmetrical profile.

The present invention consequently enables a simple and inexpensive solution to the problem of the concentration of a prevalent part of the light extracted from the device in the desired direction, for example in the direction normal to the light-extraction surface. At the same time, the device according to the invention preserves the advantage of a very homogeneous and uniform appearance, due to the fact that the light is extracted by providing portions of corrugated surface on the light guide. The fact, then, that the light reflected by the mirrors is made to retraverse the guide, and hence also the rough surface, automatically generates a further enlargement of the emission lobe, which in this case represents an advantage because it increases the angle below which an observer can perceive the surface as lit up. Unlike the traditional methods in which the light is re-directed by macroscopic prisms made on the guide, in this case each point of the lit-up surface emits the light over the entire angle of aperture envisaged, causing the surface to have the same appearance for all observers set within the angle of geometrical visibility, guaranteeing a decidedly higher aesthetic value.

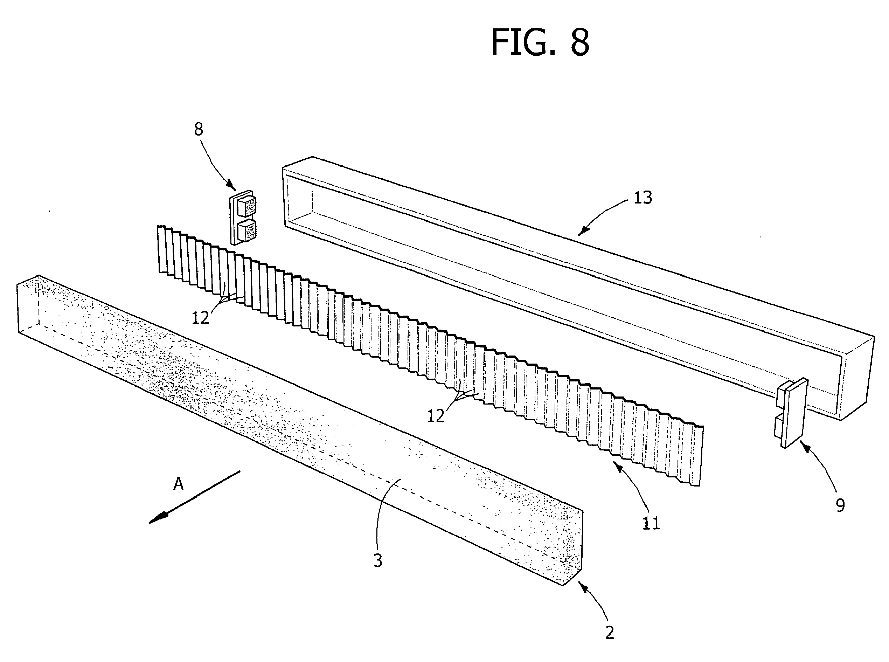

Figure 8 shows an example of application of the invention to a device that emits prevalently in the direction designated by the letter "A". The body 2 of the light guide is mounted, together with the element 11 defining the array of micromirrors 12, within a container made of plastic material 13, for example of PC-ABS, open at the front. The array of micromirrors causes the light leaving the device to have a major component in the direction A. The distribution of intensity is in any case of the type with three lobes visible in Figure 4. The homogeneous lighting that can be obtained thanks to the corrugation of the surfaces of the guide 2 and the fact that there is in any case a residual emission even at wide angles can represent an aesthetic advantage as compared to other existing applications.

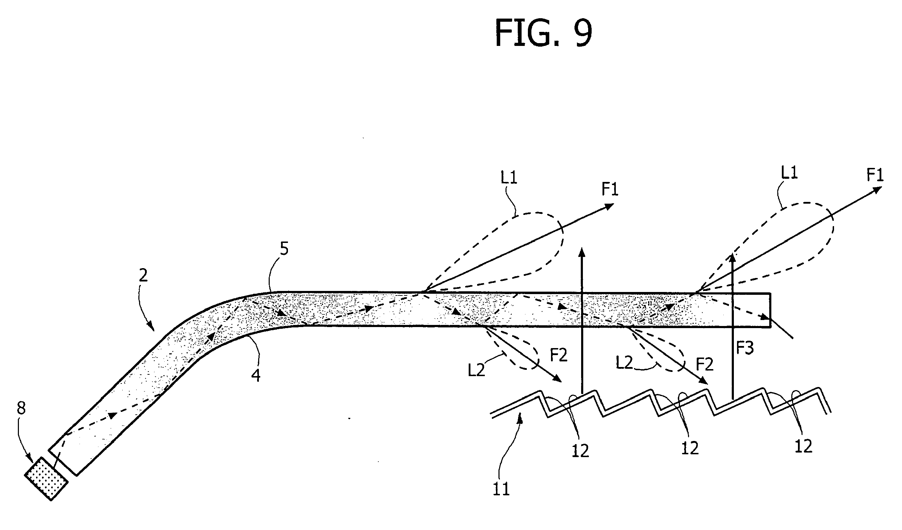

The principle of the invention can be extended to the case where the array of micromirrors 12 is set in front of a smooth surface of the light guide. Figure 9 shows the example of a device comprising a light guide 2 with an L-shaped profile, with a LED source 8 set at one end, a rough surface 5, facing the direction of exit of the light, and a smooth surface 4 set on the opposite side, facing the array of micromirrors 12, which are of asymmetrical conformation as in the case of Figure 7. The rough surface 5 enables direct extraction of the light in the main directions F1, with lobes L1. The light that is instead reflected by the rough surface 5 within the guide 2 reaches the smooth surface 4 and at least in part comes out in so far as it is perturbed following upon the previous reflection on the rough surface 5. The light thus exits from the smooth surface 4 with main directions F2 and lobes L2 and is then reflected by the micromirrors 12 in the direction F3. With a solution of this type in which the corrugated part faces the observer, it is possible to bestow an opalescent or **???**frozen appearance on the device turned off.

In addition, it is possible to apply the invention also to light guides with a wide range of other geometrical configurations.

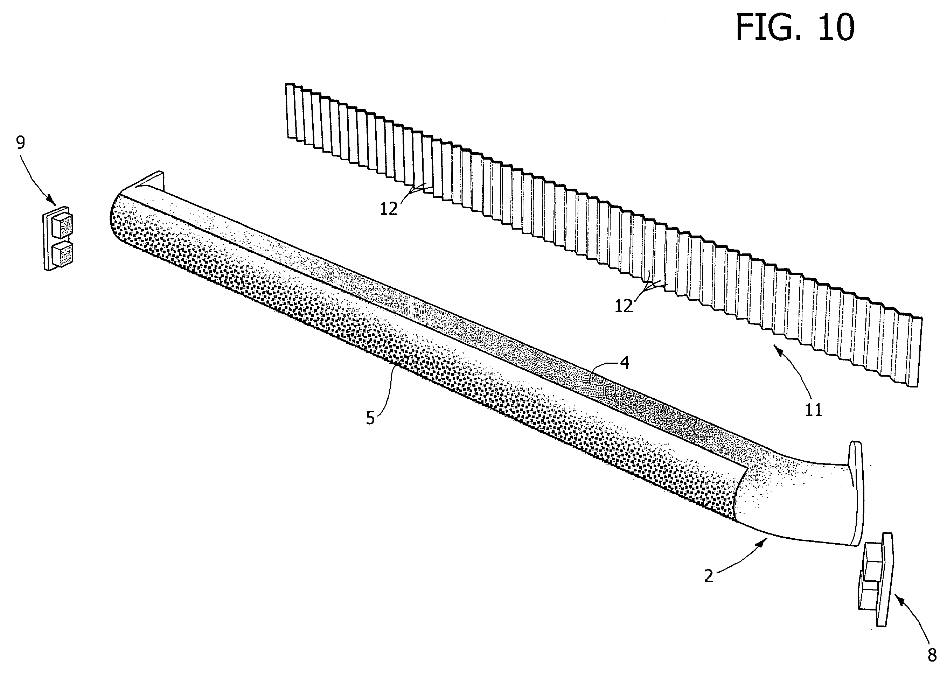

Figure 10 illustrates an example of a device that uses a light guide having an elongated cylindrical body, with a circular cross section. The device is of the same type as the one illustrated in Figure 9, in the sense that it has the micromirrors 12 facing a smooth surface portion of the guide 2. The rear part, designated by 4, of the outer surface of the body 2 of the guide is, in fact, smooth, whilst the roughness is provided on the part front 5. As may be seen, the elongated cylindrical body of the guide is curved at one end, and the ensemble is arranged in such a way that the light extracted presents an angular distribution with well-pronounced lobes. The greater the curvature of the main surface or surfaces in the average direction of propagation of the light within the guide, the smaller the distance between the mirrors and the guide and the dimension of the mirrors in order to be able to direct in an effective way the light extracted from said guide.

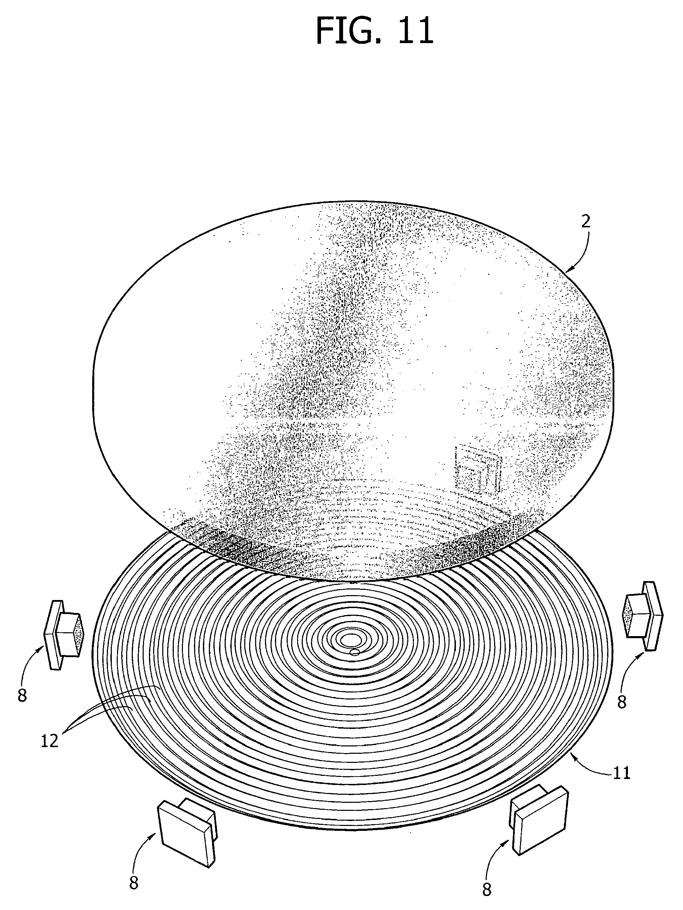

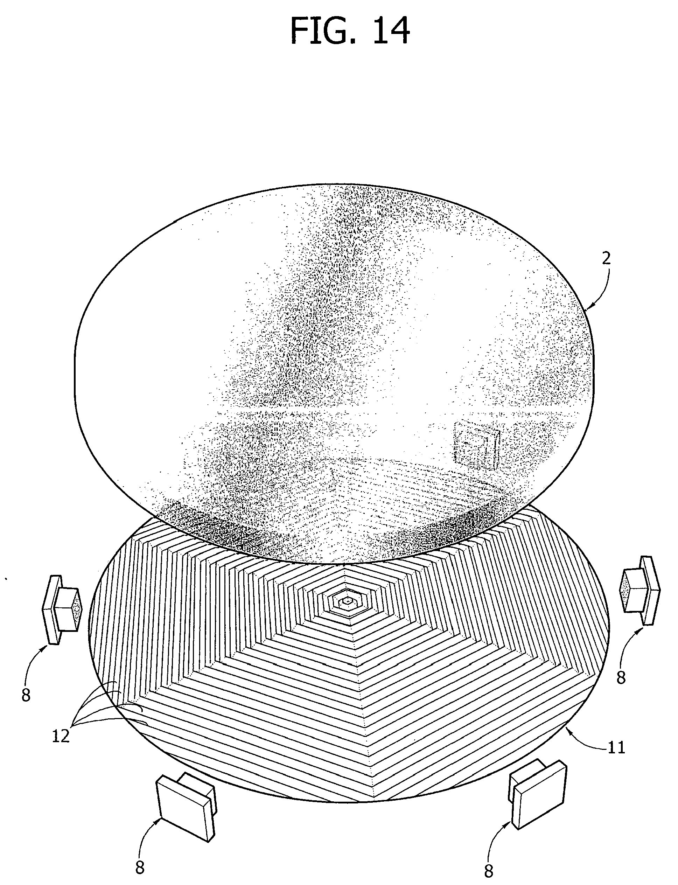

The same concept may be extended also to cases with a plurality of sources, such as, for example, a disk-shaped guide with the sources set radially along the side surface. In this case, the mirrors can be distributed according to a plurality of configurations, amongst which, for example, one in which the mirrors have a circular symmetry and are made up of concentric reflecting rings (Figure 11). Likewise possible are other configurations in which the mirrors are divided in sectors (Figure 14).

It is, of course, possible to combine the principles of the invention with an appropriate distribution of the type and of the degree of roughness of the main surfaces in order to obtain particular effects, such as a greater degree of uniformity or effects in which it is desired to vary with greater or lesser continuity the brightness of the guide.

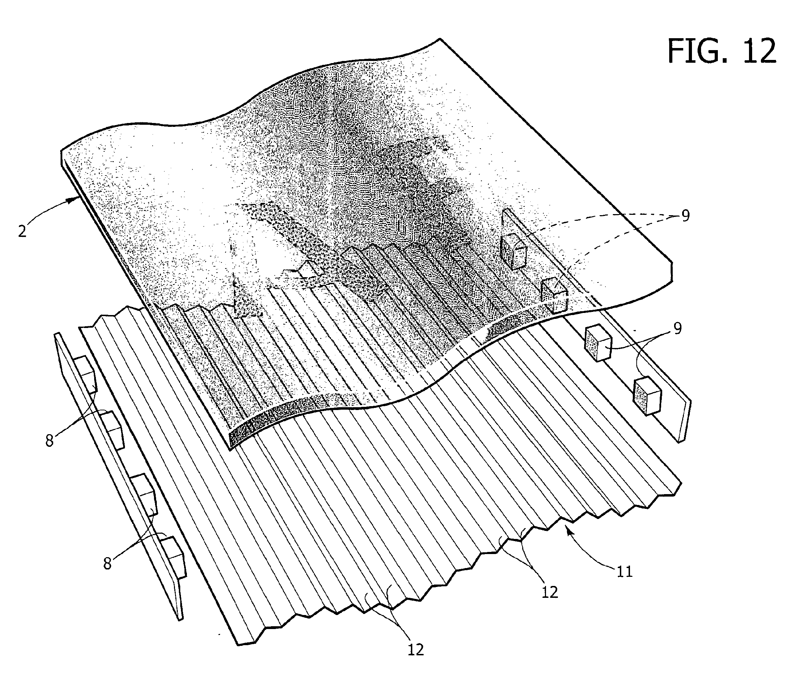

Figure 12 shows application of the invention to a device in which the corrugated or embossed portions of the surface of the light guide are confined to areas defining letters or symbols so as to provide luminous wordings that emit light, which is re-directed by the mirrors 12. In the example illustrated, the light guide is shaped like an undulated plate and bears a distribution of LEDs 8 and 9 on two opposite sides thereof.

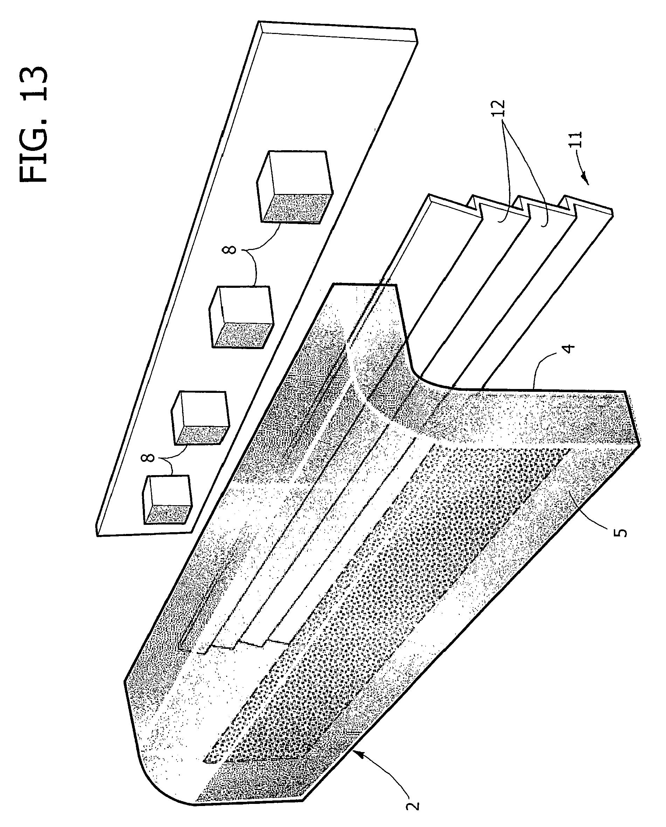

Figure 13 shows a further embodiment for a so-called "third stop light", in which the light guide 2 has an elongated body with a cross section shaped like an L turned upside down, with a horizontal part facing a distribution of LEDs 8, and a vertical part positioned behind which are the mirrors 12, which has a corrugated or embossed surface on the side facing the mirrors. Said solution presents the advantage, as compared to the one of Figure 8, of enabling use of a greater number of LEDs given the same overall dimensions so that it gives rise to a beam of light of higher intensity.

Of course, without prejudice to the principle of the invention, the details of construction and the embodiments may vary widely with respect to what is described and illustrated herein purely by way of example, without thereby departing from the scope of the present invention.

As is evident from the foregoing description, the solution envisaged by the invention enables a considerable amount of light to be obtained precisely in the areas where the corrugated surfaces of the light guide would present a minimum of emission, and this maintaining the uniform appearance that characterizes light guides of this type. Thanks to said characteristic, the light guide according to the invention is consequently advantageously suited to a wide range of applications, both in the automotive field and in the framework of lights for furnishing purposes, as likewise in that of lighting in general.

## Claims

1. A light-guide lighting device, comprising:
- a light guide (2) having a body (3) with an outer surface that is corrugated in one or more areas (4, 5) defining one or more main light-extraction surfaces, and that is smooth in other areas (6, 7); and
- at least one light source (8, 9) for introducing into the light guide (2) a beam of light (R1), which propagates at least in part by total internal reflection between the smooth areas (6, 7) of the surface of the light guide (2),
said device being **characterized in that** associated to said light guide (2) is a distribution (11) of mirrors (12) facing a surface of the guide from which the light comes out, said mirrors (12) having a pre-set geometry in such a way that a part of the light coming out through said surface is reflected so that it is made to retraverse the guide itself and to emerge from this in a desired direction.

2. The light-guide lighting device according to Claim 1, **characterized in that** said distribution of mirrors faces one (4) of said main light-extraction surfaces.

3. The light-guide lighting device according to Claim 1, **characterized in that** said distribution of mirrors faces a smooth portion of the surface of the light guide, from which there comes out at least in part light that has been reflected within the guide by one of said corrugated surfaces.

4. The light-guide lighting device according to Claim 1, **characterized in that** the light guide has two end surfaces (6, 7) and **in that** said device comprises at least one or more light sources (8, 9) adjacent to one or both of the end surfaces (6, 7) of the light guide (2).

5. The light-guide device according to Claim 1, **characterized in that** the light guide is has the shape of an elongated cylindrical body, with circular cross section, and **in that** the distribution (11) of mirrors (12) has a plane or else curvilinear profile.

6. The light-guide device according to Claim 1, **characterized in that** the light guide is disk-shaped, and **in that** the distribution of mirrors (12) comprises a plurality of reflecting surfaces arranged in concentric rings or in a sectored configuration lying in a plane facing a face of the disk (2) and **in that** a circumferential distribution of light sources is provided, which are arranged around the disk-shaped guide and emit rays of light radially towards the centre of the disk.

7. The light-guide device according to Claim 1, **characterized in that** the portions of corrugated surface of the light guide (2) are confined in areas having the conformation of symbols or letter so as to give rise to luminous symbols or wordings, the light emitted by which is re-directed by said mirrors (12).

8. The light-guide device according to Claim 7, **characterized in that** the light guide is in the form of a plate and **in that** two distributions of light sources (8, 9) are provided facing two opposite sides of the plate.

9. The light-guide device according to Claim 8, **characterized in that** the plate is undulated.

10. A motor-vehicle light **characterized in that** it comprises a lighting device according to any one of Claims 1-9.

11. The motor-vehicle light according to Claim 10, defining a central rear stop light, or third stop light, **characterized in that** the light guide is in the form of an elongated prismatic body, set in a direction transverse to the main direction of output of the beam of light.

12. The motor-vehicle light according to Claim 11, **characterized in that** a number of LED sources is provided arranged in positions adjacent to the opposite ends of the light guide.

13. The motor-vehicle light according to Claim 11, **characterized in that** the light guide (2) has an elongated body with a cross section shaped like an L turned upside down, with a horizontal part terminating in an edge facing a distribution of LEDs, and a vertical part behind which the mirrors (12) are positioned.

14. A lamp for environments in buildings, or a lamp for furnishing purposes, or a lamp for electrical household appliances, **characterized in that** it comprises a lighting device according to any one of Claims 1-9.

15. A backlighting display device or a lighting device for providing information to the public, **characterized in that** it comprises one or more devices according to any one of Claims 1-9.

16. A road-signalling device, **characterized in that** it comprises one or more devices as per Claims 1-9.
